# EUROPEAN PATENT SPECIFICATION

(11) **EP 2 795 088 B1**
(45) Date of publication and mention of the grant of the patent: **16.03.2016**
(21) Application number: 12812302.3
(22) Date of filing: 17.12.2012
(51) Int. Cl.: F02M 25/06, G05D 11/00

(54) **PRESSURIZATION DEVICE**
DRUCKBEAUFSCHLAGUNGSVORRICHTUNG
DISPOSITIF DE MISE SOUS PRESSION

(30) Priority: 19.12.2011 GB 201121845
(43) Date of publication of application: 29.10.2014
(73) Proprietor: Perkins Engines Company Limited, Cambridgeshire PE1 5FQ (GB)
(72) Inventor: SMITH, Paul, J., Peterborough Cambridgeshire PE3 8LH (GB)
(74) Representative: Boult Wade Tennant
(86) International application number: PCT/GB2012/000910
(87) International publication number: WO 2013/093394

(56) References cited:
- WO-A1-98/05853
- FR-A1- 2 846 713
- FR-A1- 2 918 773

## Description

### Technical Field

The present disclosure relates to a device for pressurizing a substance and more particularly to a device for pressurizing a substance to a pressure substantially equal or similar to that of another substance. The present disclosure also relates to component parts for such a device.

### Background

Some installations use or consume various substances, including gases, liquids or particulates. Furthermore, those installations may require some of those substances to be at a particular pressure, and sometimes at a pressure substantially equal or similar to that of another substance. This requirement may be for various reasons, including the possibility of subsequently combining controlled quantities of first and second substances to create a composition of specific proportions of each substance. The effective control of those quantities may be improved when the first and second substances are at substantially the same pressure. The first and second substances may comprise particulates, liquids or gases and the composition may comprise a combination of any of those, e.g. a mixture of particulates and liquids.

Furthermore, the pressure of the first substance may be transient and therefore it may be necessary to be able to vary the pressure of the second substance accordingly. That is to say, it may not be appropriate merely to compress the second substance to a set pressure because the first substance may not be at a constant pressure. The pressure of the second substance must be adjusted rapidly in response to a sudden change in the pressure of the first substance.

Some installations requiring two substances of equal or similar pressures may be large, fixed installations where space and energy are of little concern. However, some smaller, mobile installations exist where available space and energy for pressurizing the second substance are rather limited and thus a significant concern.

For example, the engine of a vehicle uses or consumes various substances, such as fuels, coolants, refrigerants, lubricants, emissions fluids, hydraulic fluids and many other substances that may be pressurized or even combined with other substances. For instance, those engines may be adapted to run on alternative fuels that may need to be mixed with a lubricant prior to consumption to prevent excessive friction between moving parts, such as fuel pumps.

Systems are known for combining two or more substances, such as fuel and lubricant. However, those systems store the fuel-lubricant mixture in the tank ready for consumption and the substances are known to separate when left for some time or as they are drawn from the tank. This leads to fuel-lubricant mixtures having inconsistent quantities of fuel and lubricant.

Although the present disclosure is particularly relevant to industrial installations such as engines and heavy machinery, it is believed to be equally as applicable to any other apparatus requiring two or more substances to be of substantially equal or similar pressures.

It is an object of the present disclosure to address the problems associated with known pressurization systems, as e.g. known from document WO 98/05853 A1, so as to provide a pressurization system and a pressurization method with more versatility.

### Summary of the Disclosure

According to a first aspect of the disclosure, there is provided an additive container for connection to a pressurization device having a fluid inlet passage for receiving pressurized fluid and an additive outlet passage for dispensing pressurized additive, the additive container comprising: a flexible bladder for holding additive and having a bladder outlet through which additive may be expelled; a support member provided on the flexible bladder and defining pressurization device connection means adapted to support the additive container relative to the pressurization device and to arrange the bladder outlet in fluid communication with the additive outlet passage; wherein the flexible bladder has a neck defining the bladder outlet and the support member includes a collar to which the neck attaches to define an additive flow passage; characterized by a closing member operable to control the flow of additive expelled from the bladder; wherein the closing member forms a snug fit within a portion of the collar and is arranged to slide axially between a closed position whereat it restricts the flow of the additive from the bladder and an open position whereat it permits the flow of additive from the bladder.

According to a further aspect of the present disclosure, there is provided a pressurization device comprising: a first housing part defining a fluid inlet passage and an additive outlet passage; a second housing part detachably mounted to the first housing part, which together define a chamber in fluid communication with the fluid inlet passage; and an additive container as claimed disposed within the chamber and defining an additive flow passage arranged in fluid communication with the additive outlet passage.

### Brief Description of the Drawings

One embodiment of the present disclosure will now be described in detail, with reference being made to the accompanying drawings, in which:
Figure 1 is a front perspective view of pressurization device according to the disclosure;
Figure 2 is an exploded view of the pressurization device of Figure 1;
Figure 3 is a front perspective view corresponding to Figure 1, but with the can of the device removed for clarity.
Figure 4 is a top perspective view of a head unit forming part of the pressurization device of Figures 1 to 3;
Figure 5 is a bottom perspective view of the head unit of Figure 4;
Figure 6 is a cross-sectional view along the lines A-A shown in Figure 4;
Figure 7 is a cross-sectional view along the line B-B shown in Figure 4;
Figure 8 is a perspective view of the additive container forming part of the pressurization device of Figures 1 to 3;
Figure 9 is an alternative perspective view of the additive container with the bladder removed for clarity, thus presenting a support member;
Figure 10 is a cross-sectional view through the centre of the additive container shown in Figure 8;
Figure 11 shows a second alternative support member for the additive container;
Figure' 12 shows the second alternative support member in a different configuration;
Figure 13 shows a third alternative support member for the additive container;
Figure 14 shows the third alternative support member in a different configuration; and
Figure 15 shows a cross-section through the centre of the device of Figure 1, the device being fitted with an additive container furnished with the third alternative support member.

### Detailed Description

The following is a detailed description of an exemplary embodiment of the present disclosure. The exemplary embodiment described therein and illustrated in the drawings is intended to teach the principles of the present disclosure, enabling those of ordinary skill in the art to implement and use the present disclosure in many different environments and for many different applications. Therefore, the exemplary embodiment is not intended to be, and should not be considered as, a limiting description of the scope of patent protection. Rather, the scope of patent protection shall be defined by the appended claims.

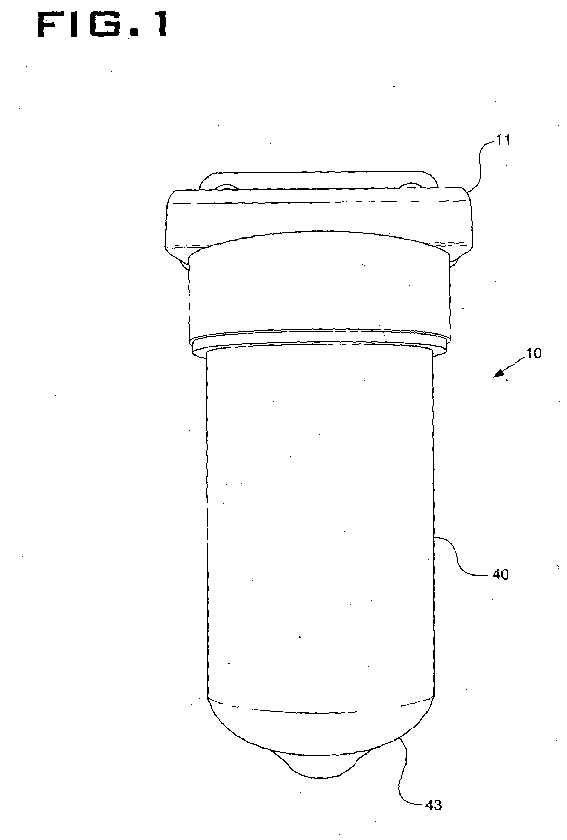

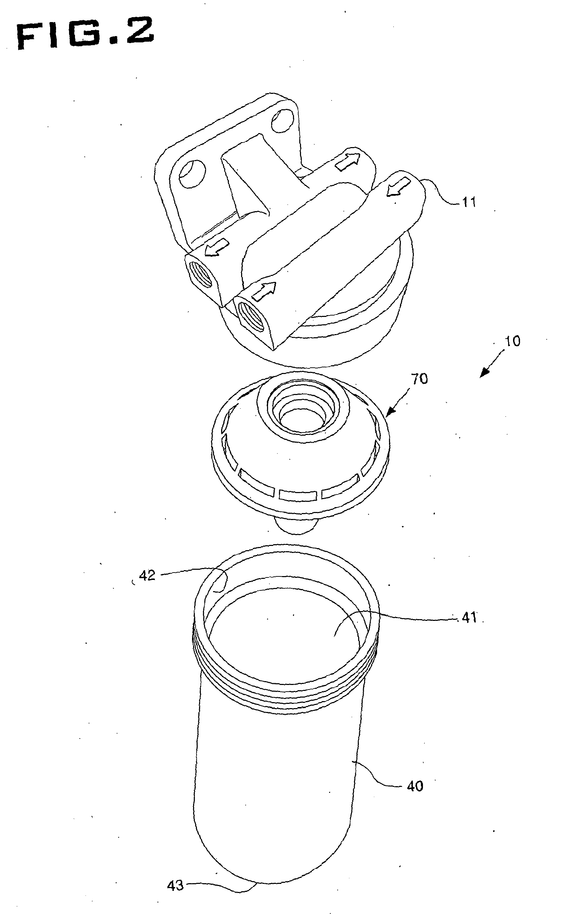

Referring to Figures 1 to 3, there is shown a device, generally indicated 10, for pressurizing a substance (not shown). The device 10 may be used for pressurizing a first substance contained in the device 10 to a pressure corresponding substantially to that of another substance. The device 10 is configured to pressurize a liquid substance, though it may also be suited to gaseous substances or particulate substances. In particular, the device 10 may be arranged for use with an additive such as a lubricant to be introduced to a fluid such as a liquid fuel, and thus serves to pressurize the additive to a pressure corresponding to that of the fluid. Controlled amounts of additive may be more easily introduced to the fluid when the additive and fluid are at the same pressure.

The device 10 may comprise a first housing part 11 to which the fluid may be delivered and from which the additives may be expelled at substantially the same pressure as the fluid. A second housing part 40 may be connected to the first housing part 11, which together define an interior space 41. An additive container 70 may be disposed within that interior space 41 and secured to the first housing part 11, the second housing part 40 or both to maintain its position. Each of which will be described in more detail below.

The first housing part 11 may fulfill several functions, such as providing a means of closing the interior of the second housing part 40, a means of directing additives (not shown) away from the device 10 and also a means of directing fluid towards the device. It may also provide a means of mounting the device 10 to a larger assembly, such as an engine.

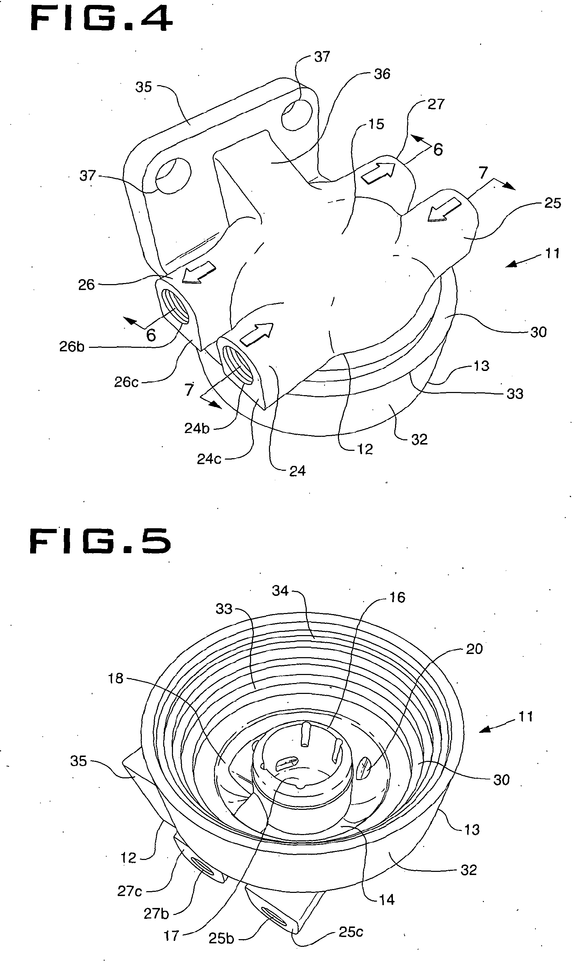

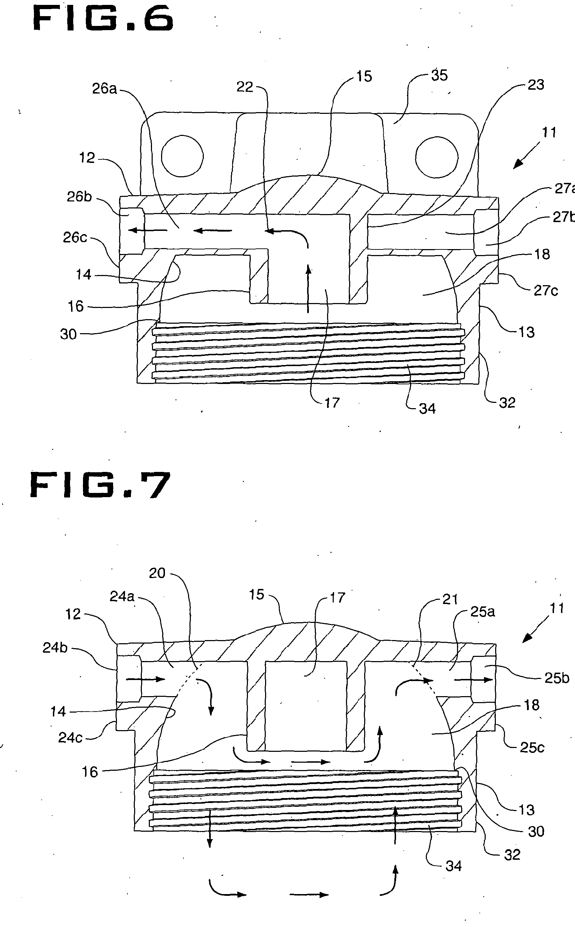

Referring now also to Figures 4 to 7, the first housing part 11 is generally cup-shaped insofar as it may define part of the interior space 41. Furthermore, the first housing part 11 may include an upper portion 12 that may be domed and a lower portion 13 that may be substantially cylindrical.

The upper portion 12 may define a substantially concave inner surface 14 and a convex outer surface 15. The interior space 41 includes an annular wall 16 depending substantially from the centre of the concave inner surface 14 so as to define an inner chamber 17 and an outer chamber 18. In this example the annular wall 16 is generally circular such that the inner chamber 17 is generally cylindrical and the outer chamber 18 is generally toroidal, though the annular wall 16 may be polygonal or any other shape.

The upper portion 12 may include fluid ports 20,21 for the delivery and expulsion of fluid and additive ports 22,23 for the expulsion of additives from the device 10. For example, the fluid ports 20,21 for the supply and expulsion of fluid may be located so as to communicate with the outer chamber 18 and the additive port 22 for the expulsion of additives may be located so as to communicate with the inner chamber 17. There may be any number of ports arranged in various positions on the upper portion 12 so as to provide a choice of configurations according to the space available within the installation.

furthermore, the convex outer surface 15 may be furnished with fluid port members 24,25 and additive port members 26,27. Each fluid port member 24,25 and additive port member 26,27 may define a passage 24A,25A,26A,27A having an inner end defined by a respective fluid port 20,21 or additive port 22,23 and an outer end defined by an opening 24B,25B,26B,27B formed in an end face 24C,25C,26C,27C. Specifically, the fluid port members 24 and 25 may be arranged such that their fluid passages 24A,25A intersect the outer chamber 18 and the additive port members 26,27 are arranged such that their passages 26A,27A intersect the inner chamber 17. Further, fluid port members 24,25 and additive port members 26,27 may be arranged to extend outwardly from the periphery of the upper portion 12 and the end faces 24C,25C,26C,27C may be suitably arranged to receive a connector (not shown) provided on the end of a hose, pipe or suitable conduit (not shown). For instance, the end faces 24C,25C,26C,27C may be substantially flat and may be orientated in parallel planes. In the exemplified embodiment, the openings 24B,25B;26B,27B in each end face may be threaded so as to receive a threaded end portion of the connector provided on the end of a hose, pipe or suitable conduit. Each connector may have a flange adjacent the threaded portion that may bear against the end face 24C,25C,26C,27C of the fluid port members 24,25 and additive port members 26,27 when fully tightened. The flange may be hexagonal or otherwise suitably profiled to enable the connector to be fully tightened by hand.or an appropriate tool.

One additive port 23 is plugged in the present example since it is not required for this particular installation. Were that additive port 23 to be required, it may be unplugged simply by drilling through the passage 27A such that the passage communicates with the inner chamber 17. In the present embodiment the fluid port members 24,25 and the additive port members 26,27 are arranged generally parallel to one another. Furthermore, the fluid port members 24,25 may be arranged such that their fluid passages 24A,25A are joined, and are possibly coaxial to aid flow. One of the openings 24B,25B may be arranged as an inlet and the other as an outlet. In this way, when the fluid passages 24A,25A are joined, some fluid may flow directly between the inlet and the outlet, while some fluid may flow in and out of the interior space 41, via the ports 20,21.

An annular lip 30 may be defined within the first housing part 11 and which may delineate the upper and lower portions 12,13. In the present embodiment, the annular lip 30 extends outwardly from a circumferential edge of the upper portion 12 and provides an interior surface against which the additive container 70 may bear when the device 10 is properly assembled. The lower portion 13 may comprise a skirt 32 depending downwardly from the outer circumferential edge 33 of the annular lip 30 so as to enclose a portion of the interior space 41. In this instance, the upper and lower portions 12,13 are both the same shape, though this need not necessarily be so. For instance, they may take different shapes depending on the size and shape of the installation or the size and shape of the additive container 40. The skirt 32 may be furnished with a threaded portion 34, possibly on its internal surface for engagement with a threaded portion 45 provided on the second housing part 40.

The first housing part 11 may be provided with a mounting bracket 35 by which the device 10 may be mounted to the installation (not shown), for example, an engine. The mounting bracket 35 may extend upwardly from an exterior surface of the annular lip 30 and may be arranged in a plane substantially normal to the plane of the annular lip 30, though other orientations may be preferable, again depending on the installation. Furthermore, a web 36 may extend between the mounting bracket and the upper portion 12 to provide increased rigidity. The mounting bracket 35 may be provided with one or more holes 37 for receiving bolts (not shown) or other suitable fasteners for securing the device 10 to the installation.

Referring again to Figures 1 to 3, the second housing part 40 may be a receptacle provided with an opening 42 adapted to connect to the first housing part 11 and sized to accommodate part of the additive container 70. The opening 42 may be adapted to engage sealingly with the first housing part 11 so as to avoid the egress of fluid flowing between those parts. In the present embodiment, the second housing part 40 is generally cylindrical with a rim 43 defining the opening 42 and the other end 44 being closed, though the second housing part 40 may take many shapes according to the available space within the installation. The second housing part 40 may include a threaded portion 45 for engagement with the threaded portion 34 of the skirt 32 of the first housing part 11. Since the threaded portion 34 is provided on the interior of the skirt 32, the threaded portion 45 in the present example is provided on the exterior of the second housing part 40. The depth of the threaded portion 45 of the second housing part 40 may be selected so that the rim 43 of the second housing part 40 may locate against or near the interior surface of the annular lip 30. Furthermore, the second housing part 40 may be furnished with an outwardly extending annular flange (not shown) disposed adjacent the threaded portion 45 and distal from the rim 43 so as to define a surface against which the free edge of the skirt 32 may bear when the second housing part 40 is connected to the first housing part 11. In addition, the second housing part 40 may be provided with a seal (not shown), such as an O-ring or the like, that may be lodged between the annular flange and the skirt 32 to restrict the egress of fluid therebetween.

In an alternative embodiment (not shown), the opening of the second housing part 40 and the skirt 32 of the first housing part 11 may be arranged to form a snug fit and may be secured by bolts or other suitable fasteners.

The can may be made of plastics or other material impermeable to the fluid for which the additive device may be used.

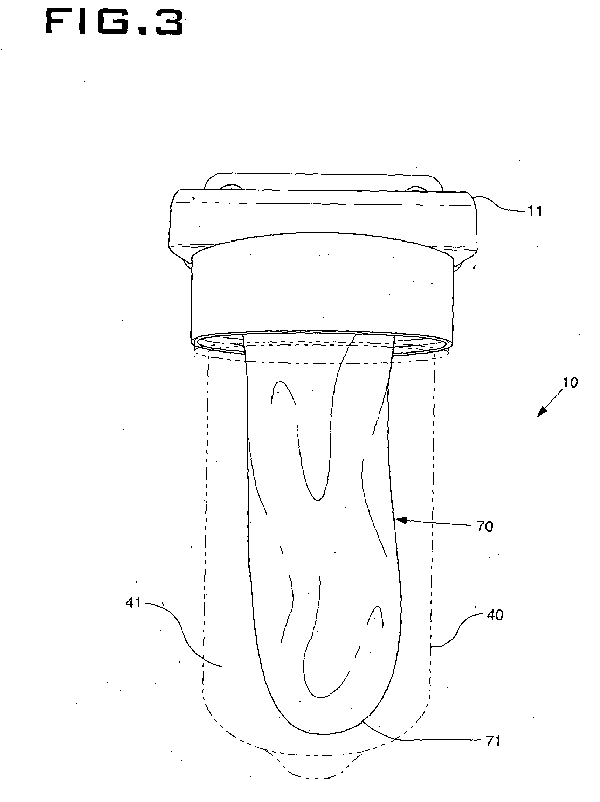

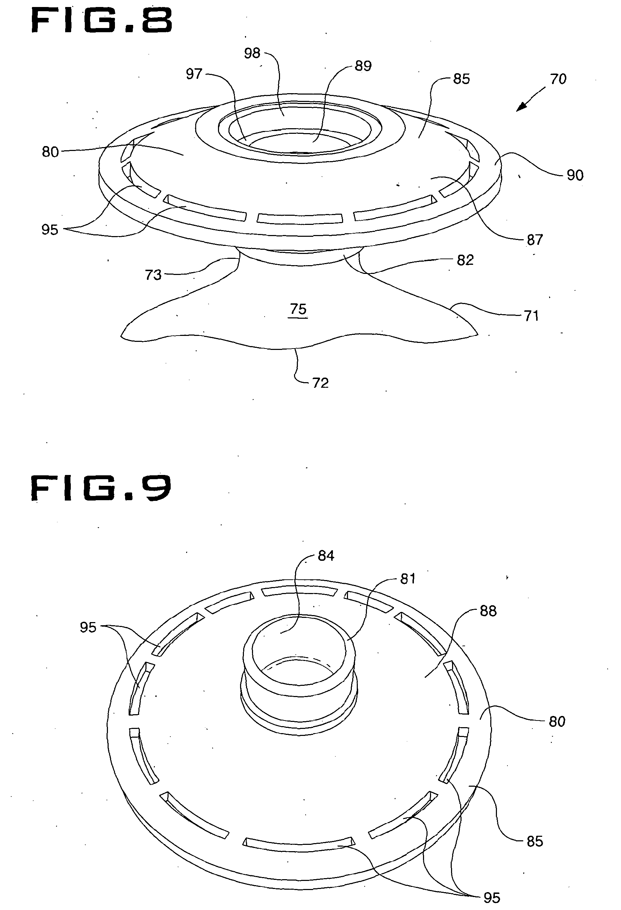

With reference to Figures 3 and 8 to 10, the additive container 70 may comprise a bladder 71 and a support member 80. The bladder 71 may comprise a main body 72 having a neck 73 defining an opening 74 into the interior 75 of the main body 72. The bladder 71 may be made from a material which is impermeable to the fluid and the additives with which the device 10 is to be used and which may enable the bladder 71 to deform elastically when subject to external pressure.

The support member 80 may be connected to the bladder 71 and may locate securely within the first housing part 11. The support member 80 may include a collar 81 over which the neck 73 of the bladder 71 locates and which may take any shape, though in the present example it is substantially circular. The neck 73 of the bladder 71 may be clamped onto the collar 81 by a ferule 82 or other mechanism that may create a hermetic seal between the collar 81 and the bladder 71. The collar 81 may include a flow passage 84, which may take any shape, but in the present embodiment is cylindrical since it is defined by the inner circumferential face of the collar. The support member 80 may further include support means 85 which may extend outwardly from the collar 81 for supporting the additive container 70 on the second housing part 40 or the first housing part 11. In one embodiment (not shown), the support means 85 may include a plurality of struts extending from the collar 81, possibly in a radial direction, and having free ends that locate against the interior surface of the annular lip 30.

In the present embodiment the support means 85 include a disc having opposed upper and lower faces 87,88 and an aperture 89 extending between those upper and lower faces 87,88. The collar 81 may depend downwardly from the lower face 88 and the aperture 89 may be sized and positioned such that its axis is coaxial with that of the collar 81. This way, the collar 81 and the aperture 89 may together define the flow passage 84 for additives being expelled from the bladder 71.

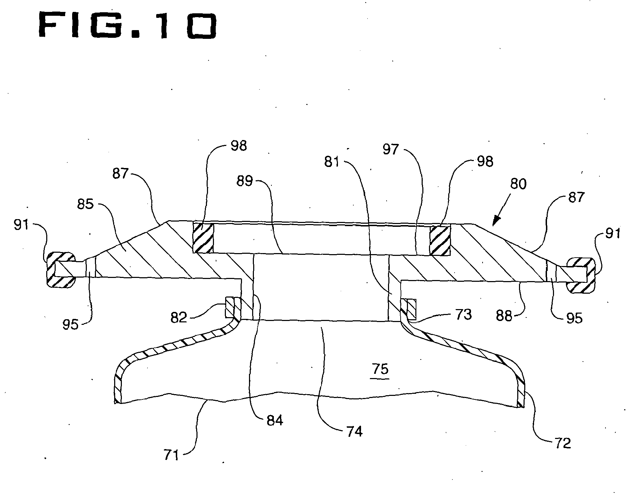

The outer periphery 90 of the disc 85 may have a substantially uniform thickness and may locate on the interior surface of the annular lip 30 so as to be trapped in position by the rim 43 of the second housing part 40 once it is screwed onto the skirt 32. In the present example, the outer periphery 90 of the disc 85 carries an annular seal 91 (Fig 10) to restrict the leakage of fluid between the second housing part 40 and the first housing part 11. The annular seal 91 may be of a flexible nature such that as it is compressed between the annular lip 30 and the rim 43 of the second housing part 40 it may extend laterally towards the skirt 32 to prevent the egress of fluid from the device 10.

Orifices 95 may be defined within the disc 85, possibly at a location proximal to the outer periphery 90 of the disc or adjacent the annular seal 91 if present, thereby enabling fluid in the outer chamber 18 to pass beyond the support member 80 and into the interior space 41 of the second housing part 40. To facilitate this, the upper face 87 of the disc may be frusto-conical so as to cause fluid falling thereon to drain towards the orifices 95.

A portion of the aperture 89 adjacent the upper face 87 of the disc 85 may be diametrically larger than the remainder of the flow passage 84 so as to define an annular recess 97. The annular recess 97 may be furnished with an annular seal 98, which may be adhered or otherwise secured within the annular recess. The annular seal 98 may have an internal diameter which is larger than the internal diameter of the flow passage 84 such that part of the annular recess 97 remains visible when the annular seal 98 is in place. Thus, when the device 10 is fully assembled, the free end of the annular wall 16 depending from the concave inner surface 14 of the first housing part 11 may locate in and form a snug fit with the annular seal 98. The inner diameter of the annular wall 16 may be at least as large as the diameter of the flow passage 84 so as not to restrict flow.

To prevent additives leaking from the additive container 70 prior to assembly, the flow passage 84 may be temporarily closed by a removable cap or bung (not shown). For instance the cap may sit within the annular recess 97 and may be removed and disposed of immediately before fitting the additive container 70 to the device 10.

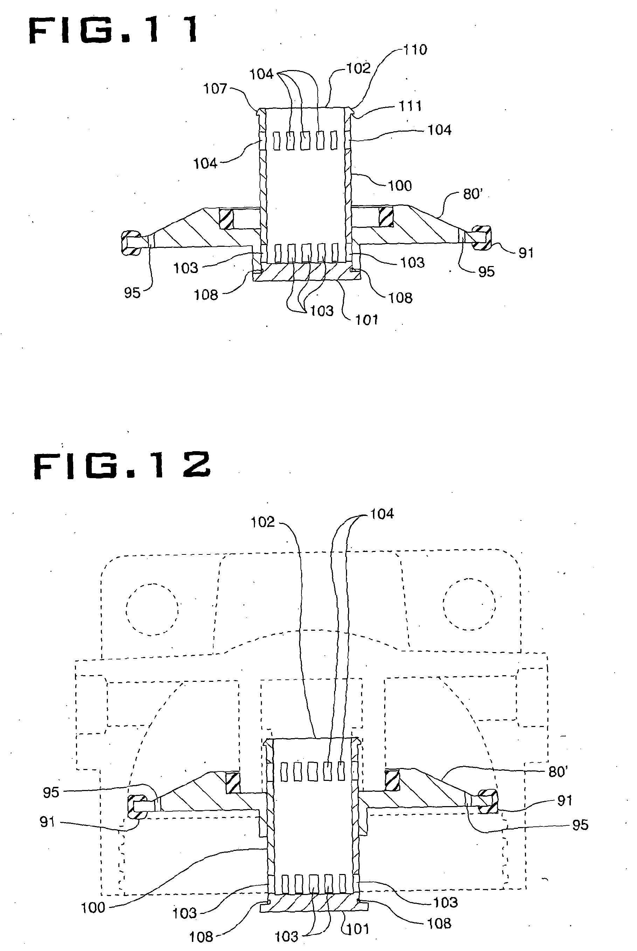

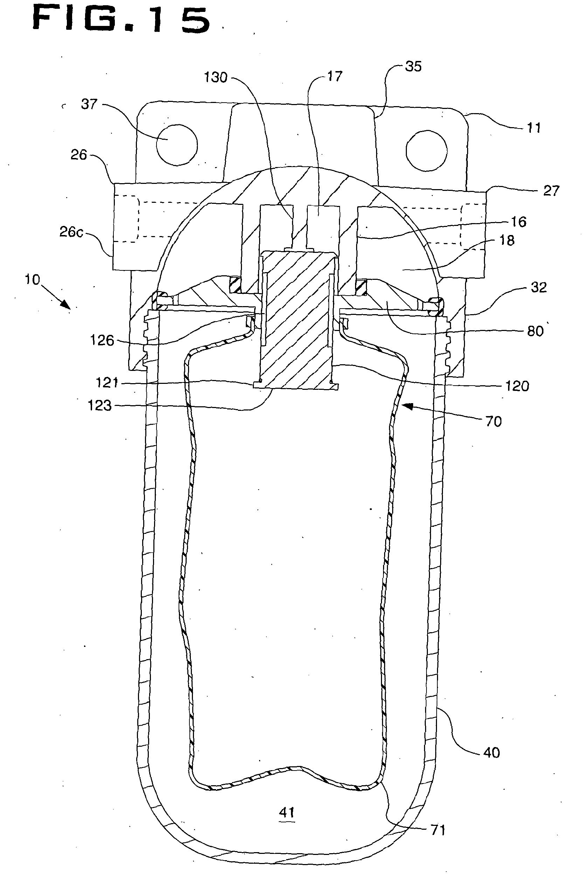

Two alternative types of support members 80',80" are shown in Figures 11 to 15, which include a closing mechanism that opens automatically during installation. Each of these will be discuss separately below.

Referring to Figures 11 and 12, the support member 80' is provided with a closing member 100, which is disposed within the flow passage 84 and arranged for sliding movement therealong between closed (Fig. 11) and open (Fig. 12) positions. The closing member 100 may be generally cylindrical and may be sized to form a snug fit within the flow passage 84. Thus, the cross-section of the closing member 100 may correspond to the shape of the flow passage 84. The closing member 100 may be tubular and may have one closed end 101 and one open end 102, the closed end in this particular embodiment being the end proximal to the bladder 71. The closing member 100 may also include one or more inlets 103 formed adjacent the one closed end 101 and optionally one or more outlets 104 formed towards the one open end 102 so as to facilitate flow of additives from the bladder 71 to the inner chamber 17, when the closing member 100 is in its open position, as shown in Figure 12.

Furthermore, the closing member 100 may be provided with abutments 106,107 at the closed and open ends 101,102, respectively. The abutment 106 at the closed end may extend at least part way around the closing member 100 so at to engage the free end of the collar 81 when in its closed position. This serves to limit axial displacement of the closing member 100 in a direction away from the bladder 71 and also to serve as a seal. The sealing characteristics may be further improved by the provision of an O-ring 108, or equivalent seal, adjacent the abutment 106 at the closed end for engaging the annular wall 16.

The abutment 107 at the open end may serve to limit axial displacement of the closing member 100 into the bladder 71 while permitting insertion of the closing member into the flow passage 84. The abutment 107 at the open end may be angled relative to the collar 81 so as to define a sloping surface 110 and an abutment surface 111. The sloping surface 110 may cause the closing member 100 to deflect or deform slightly as it is urged into the flow passage 84 during assembly and the abutment surface 111 may engage the annular recess 97 should attempts be made to remove the closing member 100 from the flow passage 84.

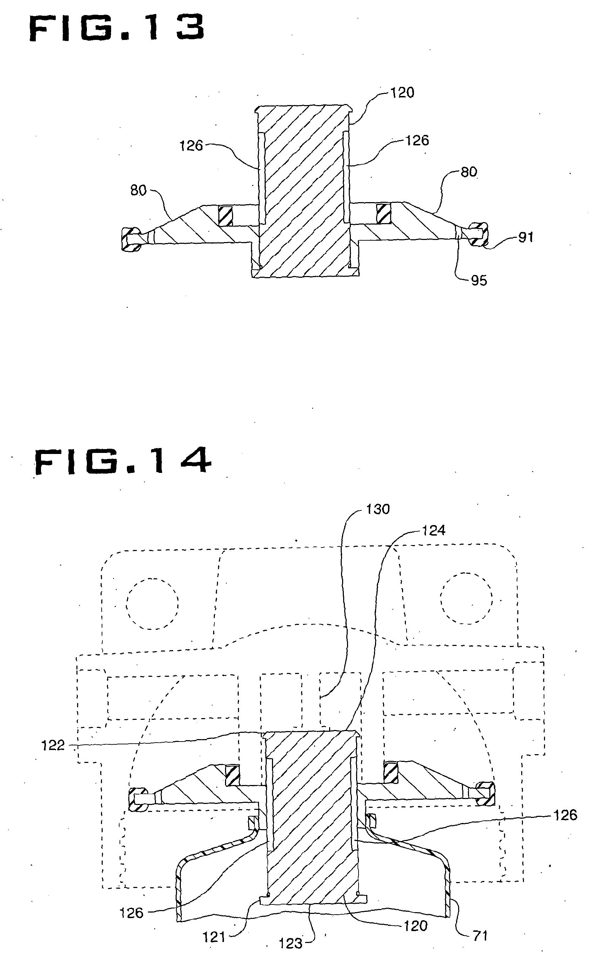

The support member 80" shown in Figures 13 to 15 may include a closing member 120 which may also be adapted to slide along the flow passage 84. In the present example, the closing member 120 is generally cylindrical and has abutments 121,122 at opposed ends 123,124 much like those of the first arrangement described above. However, this second closing member 120 need not be tubular, but may include elongate recesses 126 extending partway along its length so as to define a flow path for the fluid. The elongate recesses 126 may be longer than the length of the flow passage 84, but extend between the interior 73 of the bladder 71 and the inner chamber 17 of the head unit only when the second closing member 120 is in its open position (Fig. 14). In the closed position, the ends of the elongate recesses 126 are within the flow passage 84 so cannot be accessed from the interior 73 of the bladder 71, thus restricting the flow of additive towards the inner chamber 17.

### Industrial Applicability

To fit the device 10, first of all the first housing part 11 may be attached to the installation. This may be achieved by presenting the mounting bracket 35 to an appropriate surface on the installation such that the holes 37 align with corresponding holes formed in the appropriate surface. The first housing part 11 may be secured in place by bolts extending through the holes 37 and the corresponding holes in the appropriate surface.

The second housing part 40 and the additive container 70 may then be connected to the first housing part 11. The easiest way to do this may be first to position the additive container 70 on the second housing part 40 such that the bladder 71 locates within the interior space 41 and the outer periphery 90 rests on the rim 43 of the second housing part 40 defining the opening 42. The second housing part 40 and the additives container 70 may then be secured to the first housing part 11. This may be achieved by screwing the second housing part 40 onto the skirt 32 so as to engage the threaded portion 45 with the threaded portion 34. Once the second housing part 40 is fully screwed onto the first housing part 11, the outer periphery 90 of the support member 80 will be firmly clamped between the annular lip 30 of the first housing part 11 and the rim 43 of the second housing part 40. The clamping pressure may cause the annular seal 91 to deform so as to extend radially and thus seal the interface between the first housing part 11 and the second housing part 40. Furthermore, the annular wall 16 depending from the concave inner surface 14 may locate in the annular recess 97 and against the annular seal 98 so as to restrict or prevent additives leaking into the outer chamber 18.

The modified additive containers shown in Figures 11 to 15 include a second closing member 100,120 that is activated automatically as the second housing part 40 is screwed onto the first housing part 11. The closing member 100 shown in Figures 11 and 12 engages one or more abutments 110 extending radially inwardly from the annular wall 16, thereby preventing axial movement of the closing member 100 relative to the first housing part 11 as the second housing part 40 and the support member 80 advance further into the first housing part 11. The relative axial movement of the closing member 100 and the support member 80' effectively leads to the closing member 100 lowering into the bladder 71 and opening the flow passage 84.

The closing member 120 shown in Figures 13 to 15 works in a very similar manner to the closing member 100 of Figures 11 and 12. The main difference is that the end of the second closing member 120 proximal to the first housing part 11 may engage a stud 130 depending from the concave inner surface 14. This stud 130 prevents axial movement of the second closing member 120 relative to the first housing part 11, as the second housing part 40 and the support member 80 advance towards the first housing part 11 during the screwing action.

It is then a case of plumbing the device by attaching the connectors (not shown) of the conduits to the corresponding openings 24B,25B,26B,27B of the fluid port members 24,25 and the additive port members 26,27 and also by plugging any superfluous openings. The connector provided on the end of the additive delivery hose may be threaded on to the opening 26B of the additive port member 26 such that the flange of the connector bears against the end face 26C. Depending on the configuration of the installation and thus the available space, it may be preferable to attach the additive delivery hose to the additive port member 27, which might require the passage 27A to be drilled and the passage 26A to be plugged. Similarly, the connector provided on the end of the fluid delivery hose may be threaded into the opening 25B of the fluid port member 25 and the connector provided on the end of the fluid supply hose may be threaded onto the opening 24B of the fluid port member 24. Since the fluid passages 24A,25A in the fluid port members 24,25 each lead to the outer chamber 18, they may be conversely configured depending on the hose routing of the particular installation. That is to say, the connector of the fluid delivery hose may be attached to the opening 24B of the fluid port member 24 and the connector of the fluid supply hose may be attached to the opening 25B of the other fluid port member 25.

In use, fluid may flow through the fluid supply hose, through the passage 24A of the fluid inlet port member 24 and into the outer chamber 18 whence it flows through the orifices 95 and into the interior space 41. Fluid may be drawn from the interior space 41, outer chamber 18 and passage 25A of the fluid port member 25 and delivered through the delivery hose to another components, such as a mixer. Fluid may also flow directly between the fluid passages 24A,25A.

The pressure of the fluid in the interior space 41 is substantially the same as the pressure of the fluid elsewhere in the system. The fluid in the interior space pressurizes the bladder 71, which in turn pressurizes the additives inside the bladder 71. Those additives are then expelled through the flow passage 84, through the passage 26A within the additive port member 26 and through the additive delivery hose whereat the pressure of the additives is substantially equal to the pressure of the fluid in the system. The additives may then flow towards another component, such as the mixer where they may be introduced to the fluid.

## Claims

1. An additive container (70) for connection to a pressurization device (10) having a fluid inlet passage (24A) for receiving pressurized fluid and an additive outlet passage (26A) for dispensing pressurized additive, the additive container (70) comprising:
a flexible bladder (71) for holding additive and having a bladder outlet (74) through which additive may be expelled;
a support member (80) provided on the flexible bladder (71) and defining pressurization device (10) connection means adapted to support the additive container (70) relative to the pressurization device (10) and to arrange the bladder outlet (74) in fluid communication with the additive outlet passage (26A); wherein
the flexible bladder (71) has a neck (73) defining the bladder outlet (74) and the support member (80) includes a collar (81) to which the neck (73) attaches to define an additive flow passage (84); **characterized by**
a closing member (100,120) operable to control the flow of additive expelled from the bladder (71); wherein
the closing member (100,120) forms a snug fit within a portion of the collar (81) and is arranged to slide axially between a closed position whereat it restricts the flow of the additive from the bladder (71) and an open position whereat it permits the flow of additive from the bladder (71).

2. An additive container (70) as claimed in claim 1, wherein the support member (80) is furnished with an additive seal member (98) adapted to form a seal between the collar (81) and the additive outlet passage (26A) when the additive container (70) is fitted to the pressurization device (10).

3. An additive container (70) as claimed in claim 1 or claim 2, wherein the closing member (100,120) defines a flow path which is arranged to facilitate fluid communication between the bladder (71) and the additive outlet passage (26A) of the pressurization device (10) only when said closing member (100,120) is in its open position.

4. An additive container (70) as claimed in claim 3, wherein the device attachment means comprise a peripheral portion (90) of the support member (80) configured to locate against opposed seats (30) defined in the pressurization device (10).

5. An additive container (70) as claimed in any preceding claim, wherein the support member (80) includes an outer seal (91) for engagement with the pressurization device (10).

6. An additive container (70) as claimed in any preceding claim, wherein the support member (80) at least partially defines a fluid flow path isolated from the additive flow path and configured to enable fluid to flow between opposed sides of the support member (80) when disposed within the pressurization device (10).

7. A pressurization device (10) comprising:
a first housing part (11) defining a fluid inlet passage (24A) and an additive outlet passage (26A);
a second housing part (40) detachably mounted to the first housing part (11), which together define a chamber (41) in fluid communication with the fluid inlet passage (24A); and
an additive container (70) as claimed in any one of claims 1 to 6 disposed within the chamber (41) and defining an additive flow passage (84) arranged in fluid communication with the additive outlet passage (26A).

8. A pressurization device (10) as claimed in claim 7, wherein the first housing part (11) includes a fluid outlet passage (25A) arranged in fluid communication with the chamber (41).

9. A pressurization device (10) as claimed in claim 7 or claim 8, wherein the first housing part (11) defines an abutment surface (97) against which the closing member (100,120) bears so as to urge the closing member (100,120) in its open position during assembly.

10. A pressurization device (10) as claimed in any one of claims 7 to 10, wherein the first housing part (11) defines a sealing portion (16) arranged to engage the additive container (70) and facilitate fluid communication between the bladder (71) and the additive outlet passage (26A).

11. A fuel system comprising:
a fuel supply;
at least one fuel injector;
a conduit extending between the fuel tank and the at least one fuel injector so as to define a fuel flow path between the fuel tank and the at least one injector;
a pump disposed within the conduit to draw fuel from the fuel supply; and
a pressurization device (10) as claimed in any of claims 7 to 10, the fluid inlet passage (24A) of the pressurization device (10) being in fluid communication with the conduit.

12. A fuel system as claimed in claim 11, and further comprising mixing means configured to connect the fluid outlet passage (25A) to the conduit at a location downstream of the pressurization device (10).

## Patentansprüche

1. Zusatzmittelbehälter (70) zur Verbindung mit einer Druckerzeugungsvorrichtung (10), die einen Fluideinlasskanal (24A) zum Empfang von unter Druck stehenden Fluid und einen Zusatzmittelauslasskanal (26A) zum Ausgeben von unter Druck stehenden Zusatzmittel aufweist, wobei der Zusatzmittelbehälter (70) umfasst:
eine flexible Blase (71) zum Aufnehmen von Zusatzmittel und Aufweisen einen Blasenauslass (74), durch welchen Zusatzmittel ausgegeben werden kann;
ein Halterungselement (80), das auf der flexiblen Blase (71) bereitgestellt ist und das Mittel zur Verbindung mit der Druckerzeugungsvorrichtung (10) definiert, die darauf ausgelegt sind, den Zusatzmittelbehälter (70) relativ zu der Druckerzeugungsvorrichtung (10) zu haltern und den Blasenauslass (74) in Fluidverbindung mit dem Zusatzmittelauslasskanal (26A) zu bringen; wobei
die flexible Blase (71) einen Hals (73) aufweist, der den Blasenauslass (74) definiert, und wobei das Halterungselement (80) einen Bund (81) umfasst, an den sich der Hals (73) anfügt, um einen Zusatzmittelflusskanal (84) auszubilden; **gekennzeichnet durch**
ein Verschlusselement (100, 120), das betreibar ist, um den Fluss des aus der Blase (71) ausgestoßenen Zusatzmittels zu kontrollieren/steuern; wobei das Verschlusselement (100,120) eine gute Passung innerhalb eines Bereichs des Bundes (81) ausbildet und angeordnet ist, axial zwischen einer Verschlussposition, an der es den Fluss des Zusatzmittels von der Blase (71) begrenzt, und einer offenen Position zu gleiten, an der es den Fluss von Zusatzmittel aus der Blase (71) erlaubt.

2. Zusatzmittelbehälter (70) wie in Anspruch 1 beansprucht, wobei das Halterungselement (80) mit einem Zusatzmitteldichtungselement (98) ausgestattet ist, das ausgelegt ist, eine Dichtung zwischen dem Bund (81) und dem Zusatzmittelauslasskanal (26A) auszubilden, wenn der Zusatzmittelbehälter (70) in die Druckerzeugungsvorrichtung (10) eingepasst ist.

3. Zusatzmittelbehälter (70) wie in Anspruch 1 oder Anspruch 2 beansprucht, wobei das Verschlusselement (100, 120) einen Fließpfad definiert, der ausgelegt ist, die Fluidverbindung zwischen der Blase (71) und dem Zusatzmittelauslasskanal (26A) der Druckerzeugungsvorrichtung (10) nur zu erlauben, wenn das Verschlusselement (100, 120) in seiner offenen Position ist.

4. Zusatzmittelbehälter (70) wie in Anspruch 3 beansprucht, wobei die Mittel zur Verbindung mit der Vorrichtung einen peripheren Bereich (90) des Halterungselements (80) umfassen, der darauf ausgelegt ist, gegen gegenüberliegende Passungen (30) angeordnet zu werden, die in der Druckerzeugungsvorrichtung (10) definiert sind.

5. Zusatzmittelbehälter (70) wie in irgend einem der vorhergehenden Ansprüche beansprucht, wobei das Haltungselement (80) eine äußere Dichtung (91) zum Eingriff mit der Druckerzeugungsvorrichtung (10) umfasst.

6. Zusatzmittelbehälter (70) wie in irgend einem der vorhergehenden Ansprüche beansprucht, wobei das Halterungselement (80) wenigstens teilweise einen Fluidfließpfad definiert, der von dem Zusatzmittelfließpfad isoliert ist und der dafür ausgelegt ist, es Fluid zu ermöglichen, zwischen gegenüberliegenden Seiten des Halterungselement (80) zu fließen, wenn er innerhalb der Druckererzeugungsvorrichtung (10) angeordnet ist.

7. Druckerzeugungsvorrichtung (10) umfassend:
ein erstes Gehäuseteil (11), das einen Fluideinlasskanal (24A) und einen Zusatzmittelauslasskanal (26A) definiert;
ein zweites Gehäuseteil (40), das lösbar an dem ersten Gehäuseteil (11) montiert ist, wobei sie zusammen eine Kammer (41) in Fluidverbindung mit dem Fluideinlasskanal (24A) definieren; und
einen Zusatzmittelbehälter (70) wie in irgend einem der Ansprüche 1 bis 6 beansprucht, der innerhalb der Kammer (41) angeordnet ist und der einen Zusatzmittelfließkanal (84) definiert, der in Fluidverbindung mit dem Zusatzmittelauslasskanal (26A) angeordnet ist.

8. Druckerzeugungsvorrichtung (10) wie in Anspruch 7 beansprucht, wobei der erste Gehäuseteil (11) einen Fluidauslasskanal (25A) umfasst, der in Fluidverbindung mit der Kammer (41) angeordnet ist.

9. Druckerzeugungsvorrichtung (10) wie in Anspruch 7 oder Anspruch 8 beansprucht, wobei der erste Gehäuseteil (11) eine Anlagefläche (97) definiert, gegen die das Verschlusselement (100, 120) lastet, um das Verschlusselement (100, 120) während des Aufbaus in seine offene Position zu zwingen.

10. Druckerzeugungsvorrichtung (10) wie in irgend einem der Ansprüche 7 bis 10 beansprucht,
wobei das erste Gehäuseteil (11) einen Dichtungsbereich (16) definiert, der darauf ausgelegt ist, mit dem Zusatzmittelbehälter (70) in Eingriff zu kommen und eine Fluidverbindung zwischen der Blase (71) und dem Zusatzmittelauslasskanal (26A) zu ermöglichen.

11. Ein Treibstoffsystem umfassend:
eine Treibstoffversorgung;
mindestens einen Treibstoffeinspritzer;
eine Leitung, die sich zwischen dem Treibstofftank und dem mindestens einen Treibstoffeinspritzer erstreckt, um einen Treibstofffließpfad zwischen dem Treibstofftank und dem mindestens einen Einspritzer zu definieren;
eine Pumpe, die innerhalb der Leitung angeordnet ist, um Treibstoff aus der Treibstoffversorgung zu ziehen; und
eine Druckerzeugungsvorrichtung (10) wie in irgend einem der Ansprüche 7 bis 10 beansprucht, wobei der Fluideinlasskanal (24A) der Druckerzeugungsvorrichtung (10) in Fluidverbindung mit der Leitung ist.

12. Treibstoffsystem wie in Anspruch 11 beansprucht und ferner umfassend Mischmittel, die dafür ausgelegt sind, um den Fluidauslasskanal (25A) mit der Leitung an einem Ort stromabwärts von der Druckerzeugungsvorrichtung (10) zu verbinden.

## Revendications

1. Récipient d'additif (70) destiné à être raccordé à un dispositif de mise sous pression (10) ayant un passage d'entrée de fluide (24A) pour recevoir le fluide sous pression et un passage de sortie d'additif (26A) pour distribuer l'additif sous pression, le récipient d'additif (70) comprenant :
une vessie souple (71) pour contenir l'additif et ayant une sortie de vessie (74) à travers laquelle l'additif peut être expulsé ;
un élément de support (80) prévu sur la vessie souple (71) et définissant des moyens de raccordement de dispositif de mise sous pression (10) adaptés pour supporter le récipient d'additif (70) par rapport au dispositif de mise sous pression (10) et pour agencer la sortie de vessie (74) en communication de fluide avec le passage de sortie d'additif (26A) ; dans lequel
la vessie flexible (71) a un col (73) définissant la sortie de vessie (74) et l'élément de support (80) comprend un collier (81) auquel le col (73) se fixe pour définir un passage d'écoulement d'additif (84) ; **caractérisé par**
un élément de fermeture (100, 120) pouvant fonctionner pour contrôler l'écoulement d'additif expulsé de la vessie (71) ; dans lequel
l'élément de fermeture (100, 120) forme un ajustement parfait à l'intérieur d'une partie du collier (81) et est agencé pour coulisser axialement entre une position fermée dans laquelle il limite l'écoulement de l'additif à partir de la vessie (71) et une position ouverte dans laquelle il permet l'écoulement d'additif à partir de la vessie (71).

2. Récipient d'additif (70) selon la revendication 1, dans lequel l'élément de support (80) est doté d'un élément de joint d'étanchéité d'additif (98) adapté pour former un joint d'étanchéité entre le collier (81) et le passage de sortie d'additif (26A) lorsque le récipient d'additif (70) est monté sur le dispositif de mise sous pression (10).

3. Récipient d'additif (70) selon la revendication 1 ou la revendication 2, dans lequel l'élément de fermeture (100, 120) définit une trajectoire d'écoulement qui est agencée pour faciliter la communication de fluide entre la vessie (71) et le passage de sortie d'additif (26A) du dispositif de mise sous pression (10) uniquement lorsque ledit élément de fermeture (100, 120) est dans sa position ouverte.

4. Récipient d'additif (70) selon la revendication 3, dans lequel les moyens de fixation de dispositif comprennent une partie périphérique (90) de l'élément de support (80) configurée pour se positionner contre des sièges (30) opposés définis dans le dispositif de mise sous pression (10).

5. Récipient d'additif (70) selon l'une quelconque des revendications précédentes, dans lequel l'élément de support (80) comprend un joint d'étanchéité externe (91) pour la mise en prise avec le dispositif de mise sous pression (10).

6. Récipient d'additif (70) selon l'une quelconque des revendications précédentes, dans lequel l'élément de support (80) définit au moins partiellement une trajectoire d'écoulement de fluide isolée de la trajectoire d'écoulement d'additif et configurée pour permettre l'écoulement du fluide entre les côtés opposés de l'élément de support (80) lorsqu'il est disposé à l'intérieur du dispositif de mise sous pression (10).

7. Dispositif de mise sous pression (10) comprenant :
une première partie de boîtier (11) définissant un passage d'entrée de fluide (24A) et un passage de sortie d'additif (26A) ;
une seconde partie de boîtier (40) montée de manière détachable sur la première partie de boîtier (11), qui définissent ensemble une chambre (41) en communication de fluide avec le passage d'entrée de fluide (24A) ; et
un récipient d'additif (70) selon l'une quelconque des revendications 1 à 6, disposé à l'intérieur de la chambre (41) et définissant un passage d'écoulement d'additif (84) agencé en communication de fluide avec le passage de sortie d'additif (26A).

8. Dispositif de mise sous pression (10) selon la revendication 7, dans lequel la première partie de boîtier (11) comprend un passage de sortie de fluide (25A) agencé en communication de fluide avec la chambre (41).

9. Dispositif de mise sous pression (10) selon la revendication 7 ou la revendication 8, dans lequel la première partie de boîtier (11) définit une surface de butée (97) contre laquelle l'élément de fermeture (100, 120) s'appuie afin de pousser l'élément de fermeture (100, 120) dans sa position ouverte pendant l'assemblage.

10. Dispositif de mise sous pression (10) selon l'une quelconque des revendications 7 à 10, dans lequel la première partie de boîtier (11) définit une partie d'étanchéité (16) agencée pour mettre en prise le récipient d'additif (70) et faciliter la communication de fluide entre la vessie (71) et le passage de sortie d'additif (26A).

11. Système de carburant comprenant :
une alimentation en carburant ;
au moins un injecteur de carburant ;
un conduit s'étendant entre le réservoir de carburant et le au moins un injecteur de carburant afin de définir une trajectoire d'écoulement de carburant entre le réservoir de carburant et le au moins un injecteur ;
une pompe disposée à l'intérieur du conduit pour aspirer le carburant provenant de l'alimentation en carburant ; et
un dispositif de mise sous pression (10) selon l'une quelconque des revendications 7 à 10, le passage d'entrée de fluide (24A) du dispositif de mise sous pression (10) étant en communication de fluide avec le conduit.

12. Système de carburant selon la revendication 11 et comprenant en outre des moyens de mélange configurés pour raccorder le passage de sortie de fluide (25A) au conduit à un emplacement en aval du dispositif de mise sous pression (10).
